# EUROPEAN PATENT APPLICATION

(11) **EP 4 254 579 A1**
(43) Date of publication of application: **04.10.2023**
(21) Application number: 23153647.5
(22) Date of filing: 27.01.2023
(51) Int. Cl.: H01M 10/04, H01M 10/052, H01M 50/107, H01M 50/159, H01M 50/167, H01M 50/566, H01M 50/152, H01M 50/171, H01M 50/176, H01M 50/184, H01M 50/186, H01M 50/55, H01M 50/342, H01M 50/188, H01M 50/559

(54) **SECONDARY BATTERY**

(30) Priority: 27.01.2022 KR 20220012600
(71) Applicant: Samsung SDI Co., Ltd., Yongin-si, Gyeonggi-do 17084 (KR)
(72) Inventor: CHOI, Woo Hyuk, 17084 Yongin-si (KR); KO, Sung Gwi, 17084 Yongin-si (KR); KIM, Myung Seob, 17084 Yongin-si (KR); JUNG, Hyun Ki, 17084 Yongin-si (KR); YU, Gwan Hyeon, 17084 Yongin-si (KR)
(74) Representative: Marks & Clerk LLP

(57) **Abstract**

The present disclosure relates to a secondary battery capable of facilitating welding with an external device. As an example, disclosed is a secondary battery comprising: a cylindrical case; an electrode assembly accommodated in the cylindrical case; and a cap assembly sealing the cylindrical case and including a cap-up electrically connected to a positive electrode of the electrode assembly, a terminal plate coupled to an upper portion of the cap-up and electrically connected to a negative electrode of the electrode assembly, and a first insulating gasket interposed between the cap-up and the terminal plate.

## Description

### BACKGROUND

### 1. Field

The present disclosure relates to a secondary battery.

### 2. Description of the Related Art

Lithium ion secondary batteries are used as power sources for hybrid vehicles or electric vehicles as well as portable electronic devices because of, for example, a high operating voltage and a high energy density per unit weight.

Secondary batteries may be classified as cylindrical, prismatic, or pouch-shaped secondary batteries according to shape. For example, a cylindrical secondary battery generally includes a cylindrical case, a cylindrical electrode assembly that is coupled to the case, an electrolyte (optional) that is injected into the case to enable movement of lithium ions, and a cap assembly that is coupled to one side of the case to prevent leakage of the electrolyte and prevents separation of the electrode assembly.

The above information disclosed in this Background section is only for enhancement of understanding of the background of the invention and therefore it may contain information that does not constitute prior art.

### SUMMARY

The present disclosure provides a secondary battery capable of facilitating welding with an external device.

A secondary battery according to the present disclosure includes: a cylindrical case; an electrode assembly accommodated in the cylindrical case; and a cap assembly sealing the cylindrical case and including a cap-up electrically connected to a positive electrode of the electrode assembly, a terminal plate coupled to an upper portion of the cap-up and electrically connected to a negative electrode of the electrode assembly, and a first insulating gasket interposed between the cap-up and the terminal plate.

The terminal plate may be electrically connected to the cylindrical case.

The cylindrical case may include a beading part recessed inwardly at the lower part of the cap assembly and a crimping part bent inwardly at the upper part of the cap assembly, and the crimping part covers a portion of the terminal plate.

The terminal plate may be located above the edge of the cap-up and may expose a central portion protruding upward from the cap-up.

The area of the terminal plate may correspond to the area of the edge of the cap-up.

The first insulating gasket may be located between the edge of the cap-up and the terminal plate, and the area of the first insulating gasket may be larger than that of the terminal plate.

The first insulating gasket may include an extension part extending upward and covering a side surface of the terminal plate.

The secondary battery may further include a second insulating gasket interposed between the cap-up and the cylindrical case.

The secondary battery may further include: a vent plate installed under the cap-up and provided with a notch; a cap-down installed under the vent plate and provided with a plurality of through holes; and an insulator interposed between the vent plate and the cap-down.

The cylindrical case may include a notch provided on a bottom surface.

At least some of the above and other features of the invention are set out in the claims.

### BRIEF DESCRIPTION OF DRAWINGS

FIG. 1 is a perspective view illustrating a secondary battery according to an embodiment of the present disclosure.
FIG. 2 is a cross-sectional view illustrating a secondary battery according to an embodiment of the present disclosure.
FIGS. 3A and 3B are enlarged cross-sectional views of portion A of FIG. 2.
FIG. 4 is a cross-sectional view illustrating a secondary battery according to another embodiment of the present disclosure.

### DETAILED DESCRIPTION

Hereinafter, preferred embodiments of the present invention will be described in detail with reference to the accompanying drawings.

Examples of the present invention are provided to more completely explain the present invention to those skilled in the art, and the following examples may be modified in various other forms. The present invention, however, may be embodied in many different forms and should not be construed as being limited to the example embodiments set forth herein. Rather, these example embodiments are provided so that this disclosure will be thorough and complete and will convey the aspects and features of the present invention to those skilled in the art.

In addition, in the accompanying drawings, sizes or thicknesses of various components are exaggerated for brevity and clarity. Like numbers refer to like elements throughout. As used herein, the term "and/or" includes any and all combinations of one or more of the associated listed items. In addition, it will be understood that when an element A is referred to as being "connected to" an element B, the element A can be directly connected to the element B or an intervening element C may be present therebetween such that the element A and the element B are indirectly connected to each other.

The terminology used herein is for the purpose of describing particular embodiments only and is not intended to be limiting of the disclosure. As used herein, the singular forms are intended to include the plural forms as well, unless the context clearly indicates otherwise. It will be further understood that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present invention.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the term "below" can encompass both an orientation of above and below.

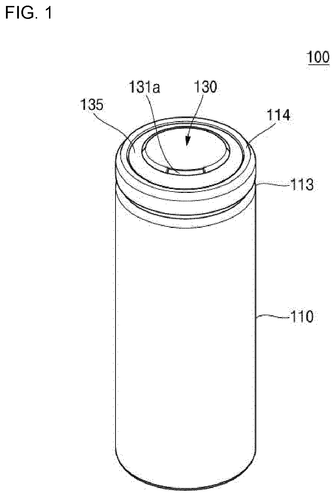

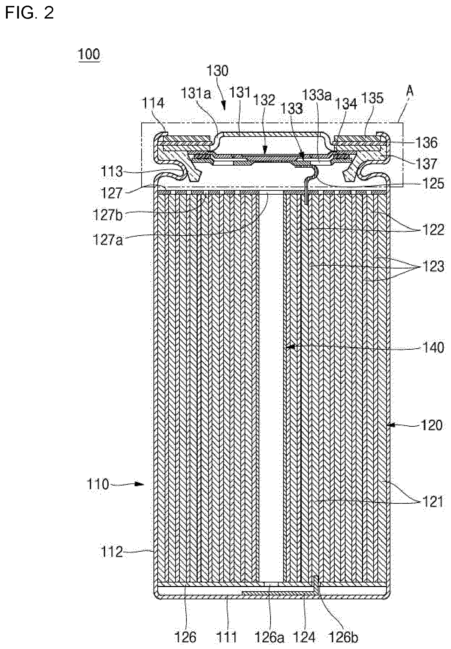

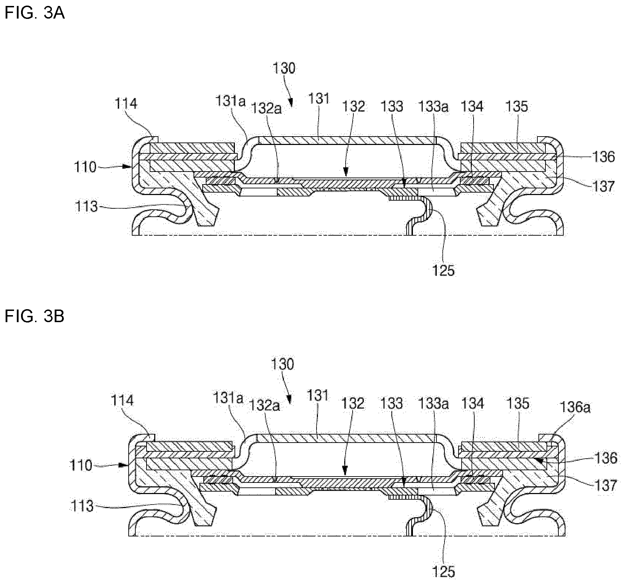

FIG. 1 is a perspective view illustrating a secondary battery according to an embodiment of the present disclosure. FIG. 2 is a cross-sectional view illustrating a secondary battery according to an embodiment of the present disclosure. FIGS. 3A and 3B are enlarged cross-sectional views of portion A of FIG. 2.

Referring to FIGS. 1 to 3B, the secondary battery 100 according to an embodiment of the present disclosure includes a cylindrical case 110, an electrode assembly 120, and a cap assembly 130. In some examples, the cap assembly 130 may include or be referred to as a cap, a cap group, a cap assembly, a cover, or a lid.

The cylindrical case 110 may include a substantially circular bottom portion 111 and a sidewall 112 extending a predetermined length upward from the bottom portion 111. In some examples, the cylindrical case 110 may include or be referred to as a can, an exterior material, or a housing.

During the manufacturing process of the secondary battery, the top of the cylindrical case 110 may be opened. Therefore, during the assembly process of the secondary battery, the electrode assembly 120 may be integrated into one structure and inserted into the cylindrical case 110. Of course, an electrolyte may be additionally injected into the cylindrical case 110 in a subsequent process.

The cylindrical case 110 may be made of steel, a steel alloy, nickel-plated steel, a nickel-plated steel alloy, aluminium, or an aluminium alloy.

In addition, the cylindrical case 110 may be provided with a beading part 113 recessed inwardly at the lower part of the cap assembly 130 so as to prevent the cap assembly 130 from escaping to the outside, and a crimping part 114 bent inwardly at the upper part of the cap assembly 130.

The electrode assembly 120 may be accommodated inside the cylindrical case 110. The electrode assembly 120 may include or be referred to as an electrode, an electrode group, or a jelly roll. The electrode assembly 120 may include a negative electrode plate 121 coated with a negative electrode active material (e.g., graphite, carbon, etc.), a positive electrode plate 122 coated with a positive electrode active material (e.g., transition metal oxide (LiCoO₂, LiNiO₂, LiMn₂O₄, etc.)), and a separator 123 located between the negative electrode plate 121 and the positive electrode plate 122 to prevent a short circuit and to allow only the movement of lithium ions. The negative electrode plate 121, the positive electrode plate 122, and the separator 123 may be wound in a substantially cylindrical shape. In some examples, the negative electrode plate 121 may be a copper (Cu) foil, the positive electrode plate 122 may be an aluminium (Al) foil, and the separator 123 may be polyethylene (PE) or polypropylene (PP).

In addition, a negative electrode tab 124 that protrudes and extends a certain length downward may be welded to the negative electrode plate 121, and a positive electrode tab 125 that protrudes and extends a certain length upward is welded to the positive electrode plate 122. In addition, the negative electrode tab 124 may be copper (Cu) or nickel (Ni), and the positive electrode tab 125 may be aluminium (Al).

In addition, the negative electrode tab 124 of the electrode assembly 120 may be welded to the bottom portion 111 of the cylindrical case 110. Therefore, the cylindrical case 110 can operate as a negative electrode. In some examples, the negative electrode tab 124 may be ultrasonically or laser welded to the bottom portion 111 of the cylindrical case 110. Of course, on the contrary, the positive electrode tab 125 may be welded to the bottom portion 111 of the cylindrical case 110, and in this case, the cylindrical case 110 may operate as a positive electrode.

In addition, a first insulation plate 126 coupled to the cylindrical case 110 and having a first hole 126a at the center and a second hole 126b outside thereof may be interposed between the electrode assembly 120 and the bottom portion 111. In some examples, the first insulation plate 126 prevents the electrode assembly 120 from electrically contacting the bottom portion 111 of the cylindrical case 110. In some examples, the first hole 126a allows gas to quickly move upward through a center pin 140 when a large amount of gas is generated due to an abnormality of the secondary battery, and the second hole 126b allows the negative electrode tab 124 to pass through and be welded to the bottom portion 111.

In addition, a second insulation plate 127 coupled to the cylindrical case 110 and having a first hole 127a at the center and a plurality of second holes 127b outside thereof may be interposed between the electrode assembly 120 and the cap assembly 130. In some examples, the second insulation plate 127 prevents the electrode assembly 120 from electrically contacting the cap assembly 130. In some examples, the second insulation plate 127 prevents the negative electrode plate 121 of the electrode assembly 120 from electrically contacting the cap assembly 130. In some examples, the first hole 127a allows the gas to quickly move to the cap assembly 130 when a large amount of gas is generated due to an abnormality of the secondary battery, and one of the second holes 127b allows the positive electrode tab 125 to pass therethrough and be welded to the cap assembly 130. In addition, the remaining second holes 127b serve to allow an electrolyte to quickly flow into the electrode assembly 120 in an electrolyte injection process.

In addition, the diameters of the first holes 126a and 127a of the first and second insulating plates 126 and 127 are formed to be smaller than the diameter of the center pin 140, and thus prevents the center pin 140 from electrically contacting the bottom portion 111 of the cylindrical case 110 or the cap assembly 130 due to an external impact.

The center pin 140 has a shape of a hollow circular pipe and may be coupled to approximately the center of the electrode assembly 120. The center pin 140 may be made of steel, stainless steel, aluminium, aluminium alloy, or polybutylene terephthalate, but the material is not limited thereto. The center pin 140 serves to suppress deformation of the electrode assembly 120 during charging and discharging of the secondary battery and serves as a passage for gas generated inside the secondary battery. In some cases, the center pin 140 may be omitted.

The cap assembly 130 may seal an opening of the cylindrical case 110 to protect the electrode assembly 120 from external environments, and, when the internal pressure of the cylindrical case 110 is higher than a reference pressure, may be broken to discharge the internal gas of the cylindrical case 110 to the outside. In some examples, the cap assembly 130 may also serve as a positive electrode terminal.

The cap assembly 130 may include a cap-up 131 provided with a plurality of through-holes 131a, a vent plate 132 installed under the cap-up 131, a cap-down 133 installed under the vent plate 132 and provided with a plurality of through-holes 133a, an insulator 134 interposed between the vent plate 132 and the cap-down 133, a terminal plate 135 installed above the cap-up 131, a first insulating gasket 136 interposed between the terminal plate 135 and the cap-up 131, and a second insulating gasket 137 interposed between the cap-down 133 and the cylindrical case 110.

The cap-up 131 may protruding upward at the center thereof to serve as a terminal electrically connected to an external device. In some examples, the cap-up 131 may serve as a positive electrode terminal. The plurality of through-holes 131a provided in the cap-up 131 may serve to discharge internal gas to the outside when an abnormal internal pressure occurs inside the cylindrical case 110 due to overcharging, etc. In some examples, the cap-up 131 may include or be referred to as a cap, a conductor plate, a cover, or a lid. In some examples, the cap-up 131 may be made of aluminium or an aluminium alloy.

The vent plate 132 may be located under the cap-up 131. In some examples, the vent plate 132 may be closely attached to, in contact with, bonded to, or connected to the lower portion of the cap-up 131. Specifically, the vent plate 132 may be closely attached to, in contact with, bonded to, or connected to the edge of the cap-up 131, except for the upwardly protruding center of the cap-up 131. In some examples, the vent plate 132 may include or be referred to as a safety vent, a safety plate, a vent, a valve, a thin plate, or a conductor plate. In some examples, the vent plate 132 may be made of aluminium or an aluminium alloy.

The vent plate 132 may further include a notch 132a formed at a predetermined depth on the upper surface. In some examples, the notch 132a may be provided at a position corresponding to the through hole 133a of the cap-down 133. In some examples, when the internal pressure of the secondary battery is greater than a reference pressure (or the breaking pressure of the vent plate), the notch 132a may be broken due to internal gas, so that the internal gas of the cylindrical case 110 is released to the outside through the through-holes 131a of the cap-up 131, and thus the safety of the secondary battery can be secured.

The cap-down 133 may be closely attached to, in contact with, bonded to, or connected to the lower portion of the vent plate 132. The cap-down 133 may be electrically connected to the electrode assembly 120 through the positive electrode tab 125. The positive electrode tab 125 of the electrode assembly 120 may be welded to the lower surface of the cap-down 133. In some examples, the lower surface of the cap-down 133 may be ultrasonically and/or laser welded to the positive electrode tab 125. In some examples, the cap-down 133 may be made of aluminium or an aluminium alloy.

In some examples, when the internal pressure of the secondary battery is greater than the reference pressure (or the rupture pressure of the vent plate), the vent plate 132 may be deformed by the internal gas, and thus the cap-down 133 and the vent plate 132 can be electrically separated.

The insulator 134 may be located between the edge of the vent plate 132 and the edge of the cap-down 133. When the vent plate 132 is deformed by internal gas, the insulator 134 may serve to insulate the cap-down 133 and the vent plate 132 from each other. In some examples, the insulator 134 may be made of a resin material, such as polyethylene (PE), polypropylene (PP), polyethylene terephthalate (PET), etc., but the material is not limited thereto.

The terminal plate 135 may be positioned above the edge of the cap-up 131. The terminal plate 135 may have a hole formed at the center, so that the center protruding upward from the cap-up 131 may be exposed to the outside. In some examples, the terminal plate 135 may be formed in a ring shape. The terminal plate 135 may be spaced apart from the center of the cap-up 131. In addition, the terminal plate 135 may be insulated from the cap-up 131 by the first insulating gasket 136.

In some examples, the area of the terminal plate 135 may correspond to the area of the edge of the cap-up 131. In addition, the terminal plate 135 that serves as the negative electrode terminal may be exposed in the same direction as the center of the cap-up 131 that serves as the positive electrode terminal. Accordingly, the secondary battery 100 according to the present disclosure may be easily coupled or welded to the positive electrode and the negative electrode of an external device (or a battery pack).

Referring to FIG. 3A, the first insulating gasket 136 is interposed between the cap-up 131 and the terminal plate 135 to insulate the cap-up 131 and the terminal plate 135 from each other. The first insulating gasket 136 may have a ring shape in which a hole is formed in the center. In some examples, the first insulating gasket 136 may be formed to have a larger area than the terminal plate 135 and the edge of the cap-up 131.

The lower surface of the first insulating gasket 136 may be in contact with or closely attached to the edge of the cap-up 131 and the second insulating gasket 137, and the upper surface of the first insulating gasket 136 may be in contact with or closely attached to the terminal plate 135. The outer surface of the first insulating gasket 136 may be in contact with or closely attached to the cylindrical case 110.

In some examples, the first insulating gasket 136 may include or be referred to as a sealing gasket, an insulator, or a resin. The first insulating gasket 136 may be made of a resin material, such as polyethylene (PE), polypropylene (PP), polyethylene terephthalate (PET), etc., but the material is not limited thereto.

Referring to FIG. 3B, the first insulating gasket 136 may further include an extension part 136a extending upward and covering the side surface of the terminal plate 135. The extension part 136a may be located on both edges of the first insulating gasket 136 to cover inner and outer surfaces of the terminal plate 135. In this way, the first insulating gasket 136 may prevent the terminal plate 135 from contacting the cap-up 131.

The second insulating gasket 137 may be interposed between the cylindrical case 110, and the cap-up 131, the vent plate 132 and the cap-down 133. The second insulating gasket 137 may cover the outer circumferences of the cap-up 131, the vent plate 132, and the cap-down 133. The outer surface of the second insulating gasket 137 may be in contact with or closely attached to the cylindrical case 110. The second insulating gasket 137 may be made of a resin material, such as polyethylene (PE), polypropylene (PP), polyethylene terephthalate (PET), etc., but the material is not limited thereto.

The second insulating gasket 137 may be in close contact with the beading part 113, and the inner surface of the second insulating gasket 137 may be in close contact with the edges of the cap-up 131, the vent plate 132, and the cap-down 133. In some examples, the second insulating gasket 137 may include or be referred to as a sealing gasket, an insulator, or a resin. The second insulating gasket 137 may be made of a resin material, such as polyethylene (PE), polypropylene (PP), polyethylene terephthalate (PET), etc., but the material is not limited thereto.

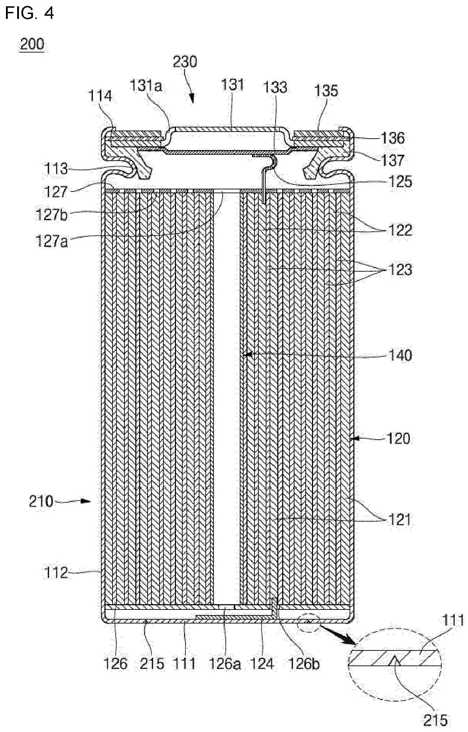

FIG. 4 is a cross-sectional view illustrating a secondary battery according to another embodiment of the present disclosure.

Referring to FIG. 4, the secondary battery 200 according to another embodiment of the present disclosure includes a cylindrical case 210, an electrode assembly 120, and a cap assembly 230.

The cylindrical case 210 may include a substantially circular bottom portion 111, a side wall 112 extending a certain length upward from the bottom portion 111, and a notch 215 provided on the bottom portion 111.

The notch 215 may be formed to a certain depth on the lower surface of the bottom portion 111. In some examples, the notch 215 may be provided on the upper surface of the bottom portion 111 or may be provided on both the upper and lower surfaces. The notch 215 may be located outside a portion of the bottom portion 111 where the negative electrode tab 124 is welded. The notch 215 may be continuously formed on the bottom portion 111. In some examples, the notch 215 may include a plurality of notches formed in the bottom portion 111 at a certain interval.

In some examples, when the internal pressure of the secondary battery is higher than a reference pressure, the notch 215 may be broken to discharge the internal gas of the cylindrical case 110 to the outside (lower side), and thus the safety of the secondary battery can be ensured. In addition, when the notch 215 is broken, the negative electrode tab 124 and the sidewall 112 of the cylindrical case 110 may be electrically separated, thereby blocking the current flowing to the terminal plate 135.

The cap assembly 230 may include a cap-up 131 provided with a plurality of through-holes 131a, a cap-down 133 installed under the cap-up 131, a terminal plate 135 installed above the cap-up 131, a first insulating gasket 136 interposed between the terminal plate 135 and the cap-up 131, and a second insulating gasket 137 interposed between the cap-down 133 and the cylindrical case 210.

The cap assembly 230 shown in FIG. 4 may have a structure in which the vent plate 132 and the insulator 134 are omitted from the cap assembly 130 shown in FIG. 2. In the secondary battery 200 according to the present disclosure, instead of the vent plate 132 and the insulator 134 being omitted, the notch 215 provided in the cylindrical case 210 may serve as the vent plate 132 and the insulator 134.

As described above, the secondary battery according to an embodiment of the present disclosure includes a terminal plate electrically connected to a cylindrical case and installed in the same direction as a cap-up, thereby facilitating welding with an external device.

While the foregoing embodiment is only one embodiment for carrying out the secondary battery according to the present disclosure, which is not limited to the embodiment, it will be understood by a person skilled in the art that various changes in form and details may be made therein without departing from the scope of the present disclosure as defined by the following claims.

## Claims

1. A secondary battery comprising:
a cylindrical case;
an electrode assembly accommodated in the cylindrical case; and
a cap assembly sealing the cylindrical case and including a cap-up electrically connected to a positive electrode of the electrode assembly, a terminal plate coupled to an upper portion of the cap-up and electrically connected to a negative electrode of the electrode assembly, and a first insulating gasket interposed between the cap-up and the terminal plate.

2. The secondary battery of claim 1, wherein the terminal plate is electrically connected to the cylindrical case.

3. The secondary battery of claim 1 or claim 2, wherein the cylindrical case includes a beading part recessed inwardly at the lower part of the cap assembly and a crimping part bent inwardly at the upper part of the cap assembly, and the crimping part covers a portion of the terminal plate.

4. The secondary battery of any one of claims 1 to 3, wherein the terminal plate is located above the edge of the cap-up and exposes a central portion protruding upward from the cap-up.

5. The secondary battery of any one of claims 1 to 4, wherein the area of the terminal plate corresponds to the area of the edge of the cap-up.

6. The secondary battery of any one of claims 1 to 5, wherein the first insulating gasket is located between the edge of the cap-up and the terminal plate, and the area of the first insulating gasket is larger than that of the terminal plate.

7. The secondary battery of any one of claims 1 to 6, wherein the first insulating gasket includes an extension part extending upward and covering a side surface of the terminal plate.

8. The secondary battery of any one of claims 1 to 7, further comprising a second insulating gasket interposed between the cap-up and the cylindrical case.

9. The secondary battery of any one of claims 1 to 8, further comprising:
a vent plate installed under the cap-up and provided with a notch;
a cap-down installed under the vent plate and provided with a plurality of through holes; and
an insulator interposed between the vent plate and the cap-down.

10. The secondary battery of any one of claims 1 to 9, wherein the cylindrical case includes a notch provided on a bottom surface.
